# EUROPÄISCHE PATENTANMELDUNG

(11) **EP 4 442 103 A1**
(43) Veröffentlichungstag der Anmeldung: **09.10.2024**
(21) Anmeldenummer: 24162935.1
(22) Anmeldetag: 12.03.2024
(51) Int. Cl.: A01D 61/00

(54) **FÖRDERVORRICHTUNG FÜR LANDWIRTSCHAFTLICHES ERNTEGUT**

(30) Priorität: 06.04.2023 DE 102023108952
(71) Anmelder: Maschinenfabrik Bernard Krone GmbH & Co. KG, 48480 Spelle (DE)
(72) Erfinder: Sand, Christian, 49509 Recke (DE); Stabel, Peter, 54584 Gönnersdorf (DE)

(57) **Zusammenfassung**

Die vorliegende Erfindung betrifft eine Fördervorrichtung für landwirtschaftliches Erntegut, die zu einer Rotation in eine Hauptdrehrichtung um eine Drehachse ausgebildet ist. Die Fördervorrichtung umfasst einen Grundkörper, zur Förderung des Erntegutes in eine erste axiale Richtung zumindest eine erste Förderwendel und eine zweite Förderwendel , die sich jeweils in eine erste Spiralrichtung spiralförmig um einen ersten Seitenabschnitt des Grundkörpers erstrecken, die zwischen sich zumindest zwei erste Förderkanäle auf dem ersten Seitenabschnitt ausbilden und jeweils in einem Wendelende an einem axial an den ersten Seitenabschnitt angrenzenden Mittelabschnitt des Grundkörpers münden. Außerdem umfasst die Fördervorrichtung zur Förderung des Erntegutes in eine radiale Richtung zumindest zwei an dem Mittelabschnitt angeordnete und radial von dem Grundkörper abstehende, erste Förderelemente, die jeweils einem der Förderwendeln, zugeordnet sind. Erfindungsgemäß bilden die ersten Förderelemente jeweils einen der ersten Förderkanäle derart bis auf den Mittelabschnitt weiter, dass sich eine erste Seitenfläche jedes ersten Förderelementes in die erste Spiralrichtung an das Wendelende derjenigen Förderwendel, anschließt, der das jeweilige erste Förderelement zugeordnet ist.

## Beschreibung

Die Erfindung betrifft eine Fördervorrichtung für landwirtschaftliches Erntegut. Die Fördervorrichtung ist zu einer Rotation in eine Hauptdrehrichtung um eine Drehachse ausgebildet. Die Fördervorrichtung umfasst einen Grundkörper. Außerdem umfasst die Fördervorrichtung zumindest eine erste Förderwendel und eine zweite Förderwendel. Die erste Förderwendel und die zweite Förderwendel sind zur Förderung des Erntegutes in eine erste axiale Richtung ausgebildet. Die erste Förderwendel und die zweite Förderwendel erstrecken sich jeweils in eine erste Spiralrichtung spiralförmig um einen ersten Seitenabschnitt des Grundkörpers. Die erste Förderwendel und die zweite Förderwendel bilden zwischen sich zumindest zwei erste Förderkanäle auf dem ersten Seitenabschnitt aus. Die erste Förderwendel und die zweite Förderwendel münden jeweils in einem Wendelende an einem axial an dem ersten Seitenabschnitt angrenzenden Mittelabschnitt des Grundkörpers. Außerdem umfasst die Fördervorrichtung zumindest zwei an dem Mittelabschnitt angeordnete erste Förderelemente. Die zumindest zwei ersten Förderelemente stehen radial von dem Grundkörper ab. Die ersten Förderelemente sind zur Förderung des Erntegutes in eine radiale Richtung ausgebildet. Die ersten Förderelemente sind jeweils der ersten Förderwendel oder der zweiten Förderwendel zugeordnet.

Eine derartige Fördervorrichtung ist aus der DE 38 04 598 C2 bekannt. Hier schlie-ßen sich an die beiden Wendelenden Endscheiben an, die sich rechtwinklig zur Drehachse eben erstrecken. Zwischen den Endscheiben und den axial dazu benachbarten Förderwendeln ergeben sich keilförmige Förderkanalenden. Diese sind insofern problematisch, als in die erste axiale Richtung gefördertes Erntegut hier extrem verdichtet wird und sich regelmäßig eingeklemmt. Eingeklemmtes Erntegut behindert die Förderung weiteren Erntegutes durch den entsprechenden Förderkanal. Außerdem führt das eingeklemmte Erntegut zu einer erhöhten Belastung der Fördervorrichtung. Die Verdichtung des Erntegutes und ein anschließendes Lösen des verdichteten Erntegutes führen zu einem ungleichmäßigen Erntegutfluss. Dadurch entstehen unbeabsichtigte, jedoch bei der Auslegung der Fördervorrichtung zu berücksichtigende Lastspitzen.

Aufgabe der vorliegenden Erfindung ist eine Weiterbildung der gattungsgemäßen Fördervorrichtung derart, dass die vorbeschriebenen Probleme vermieden werden und insbesondere ein hoher und gleichmäßiger Erntegutdurchsatz erreicht wird. Ferner ist Aufgabe der vorliegenden Erfindung die Bereitstellung eines Erntevorsatzes mit der Fördervorrichtung.

Erfindungsgemäß wird die Aufgabe dadurch gelöst, dass die ersten Förderelemente jeweils einen der ersten Förderkanäle bis auf den Mittelabschnitt weiterbilden. Dazu schließt sich eine erste Seitenfläche jedes der ersten Förderelemente in die erste Spiralrichtung an das Wendelende derjenigen Förderwendel an, der das jeweilige erste Förderelement zugeordnet ist.

Bei der Fördervorrichtung handelt es sich insbesondere um eine Förderschnecke, die in landwirtschaftlichen Erntemaschinen einzusetzen ist. Die Fördervorrichtung rotiert im beabsichtigen Betrieb in die Hauptdrehrichtung. Bevorzugt ist die Fördervorrichtung zum Reversieren von Erntegut in eine der Hauptdrehrichtung entgegengesetzte Reversierdrehrichtung zu rotieren. Die Förderwendeln dienen bevorzugt zu einer Förderung des Erntegutes quer zur Fahrtrichtung der Erntemaschine. Dementgegen dienen die Förderelemente hauptsächlich zu einer Förderung des Erntegutes entgegen der Fahrtrichtung, insbesondere in einen Einzugskanal der Erntemaschine. Beim Reversieren dienen die Förderelemente besonders bevorzugt zu einer Förderung des Erntegutes in die Fahrtrichtung. Die Fördervorrichtung ist bevorzugt starr ausgebildet. Dazu sind die Förderwendeln bevorzugt auf den Grundkörper aufgeschweißt. Die Förderelemente sind bevorzugt auf den Grundkörper aufgeschweißt oder aufgeschraubt. Die Förderwendeln und die Förderelemente sind insbesondere auf einer zylindermantelförmigen Außenfläche des Grundkörpers angeordnet. Vorzugsweise umfasst die Fördervorrichtung zumindest einen mit dem Grundkörper verbundenen Lagerzapfen und einen mit dem Grundkörper verbundenen Antriebszapfen.

Die erste Förderwendel und die zweite Förderwendel bilden gemeinsam ein mehrgängiges Fördergewinde um den Grundkörper aus. Die erste Förderwendel und die zweite Förderwendel sind bevorzugt um 180° in die Hauptdrehrichtung zueinander versetzt an dem Grundkörper angeordnet. Die erste Förderwendel und die zweite Förderwendel haben bevorzugt eine übereinstimmende und in die erste axiale Richtung gleichbleibende Gewindesteigung. Die Gewindesteigung beträgt bevorzugt mindestens 600 mm und/oder höchstens 800 mm, besonders bevorzugt zumindest im Wesentlichen 750 mm. Bei dieser Gewindesteigung und der Mehrzahl von Förderwendeln ergibt sich bereits relativ geringen Drehzahlen eine Fördergeschwindigkeit in die erste axiale Richtung, die einen hohen Erntegutdurchsatz ermöglicht. Gleichzeitig wird das Erntegut im Vergleich zu einem eingängigen Fördergewinde in relativ kleine in die radiale Richtung weiterzufördernde Erntegutportionen unterteilt, wodurch der Einzugskanal gleichmäßiger mit Erntegut beschickt wird.

Die Anzahl der Förderkanäle entspricht der Anzahl der Förderwendeln. In die erste axiale Richtung und entgegengesetzt sind die Förderkanäle jeweils durch eine der Förderwendeln begrenzt. Zur Drehachse hin sind die Förderkanäle von dem Grundkörper begrenzt. Nach außen sind die Förderkanäle von einer gedachten, an die Förderwendeln angrenzenden und zylindermantelförmigen Hüllfläche begrenzt. Die Breiten des ersten Förderkanals und des zweiten Förderkanals, die rechtwinklig zur ersten Spiralrichtung gemessen werden, sind vorzugsweise gleich.

Die erste Förderwendel und die zweite Förderwendel grenzen mit ihren Wendelenden bevorzugt an dieselbe zur Drehhachse rechtwinklige Ebene an. In dieser Ebene grenzt insbesondere der Mittelabschnitt des Grundkörpers an den ersten Seitenabschnitt des Grundkörpers. Der erste Seitenabschnitt und der Mittelabschnitt sind dabei bevorzugt einstückig ausgebildet. Vom Grundkörper beabstandete Wendelaußenkanten der Förderwendeln haben bevorzugt zumindest abgesehen von den Wendelenden einen konstanten Abstand zur Drehachse. Im Bereich der Wendelenden verringert sich der Abstand besonders bevorzugt allmählich, vorzugsweise bis die Wendelaußenkanten unmittelbar auf dem Grundkörper enden.

Die ersten Förderelemente dienen dazu, dass durch die Förderwendeln in die erste axiale Richtung bis zum Mittelabschnitt geförderte Erntegut von dem Grundkörper zu entfernen. Insbesondere ist der ersten Förderwendel und der zweiten Förderwendel jeweils genau ein erstes Förderelement zugeordnet. Vorzugsweise gleicht die Zahl der Förderelemente der Zahl der Förderwendeln der Fördervorrichtung. Die Fördervorrichtung ist insbesondere frei von Förderelementen, die ganz oder teilweise in den weitergebildeten Förderkanälen angeordnet sind. Die Zuordnung der Förderelemente zu den Förderwendeln ist insbesondere derart zu verstehen, dass die Förderelemente dem Wendelende derjenigen Förderwendel am nächsten sind, der sie zugordnet sind. Das von einer der Förderwendeln um den ersten Seitenabschnitt in die erste axiale Richtung bewegte Erntegut wird, nachdem das Erntegut die vorbeschriebene Ebene durchtreten hat, bevorzugt von demjenigen ersten Förderelement in die radiale Richtung gefördert, das der Förderwendel zugeordnet ist.

Die ersten Förderelemente bilden die ersten Förderkanäle insbesondere bei gleichbleibender Breite derer bis auf den Mittelabschnitt weiter. Dazu ist bevorzugt zumindest ein Teil der ersten Förderelemente in die erste axiale Richtung versetzt zu dem jeweiligen Wendelende positioniert. Zur Weiterbildung der ersten Förderkanäle sind die ersten Förderelemente mit den Wendelenden in Kontakt oder von den Wendelenden beabstandet positioniert. Ein lückenloser Übergang von den Wendelenden auf die jeweiligen Förderelemente ist aufgrund der im Betrieb üblichen großen Drehzahlen nicht erforderlich, um das Erntegut zuverlässig durch die weitergebildeten Förderkanäle zu fördern. Ein lückenloser Übergang ist aufgrund der kontinuierlichen Querförderung des Erntegutes nicht erforderlich.

Die ersten Förderelemente sind insbesondere derart ausgebildet, dass ihre Haupterstreckungsrichtung parallel zur Drehachse angeordnet ist. Die Außenradien der ersten Förderelemente sind insbesondere geringer als die Außenradien der Förderwendeln. Die ersten Förderelemente sind bevorzugt vor einem Ende des Grundkörpers, das von dem ersten Seitenabschnitt gebildet ist, weniger weit beabstandet als von einem gegenüberliegenden zweiten Ende des Grundkörpers. Vorzugsweise haben die ersten Förderelemente eine zur Drehachse rechtwinklige Querschnittsfläche, die zumindest teilweise in die erste axiale Richtung unveränderlich bleibt.

Die ersten Seitenflächen sind zumindest bei isolierter Betrachtung der ersten Förderelemente bevorzugt Stirnflächen. Die ersten Seitenflächen sind bevorzugt dem Seitenabschnitt zugewandt. Die ersten Seitenflächen schließen sich derart in die erste Spiralrichtung an die Wendelenden an, dass die ersten Seitenflächen zumindest teilweise sowohl entgegen die Hauptdrehrichtung als auch in die erste axiale Richtung zu den Wendelenden versetzt positioniert sind. Die ersten Seitenflächen liegen insbesondere auf oder parallel zu einer gedachten Hilfslinie, die sich ausgehend vom Wendelende über die Förderwendel hinaus in die erste Spiralrichtung um den Grundkörper erstreckt. Die Fördervorrichtung ist insbesondere fei von sich an die Wendelenden anschließenden Endscheiben, die sich rechtwinklig zur Drehachse eben erstrecken und aus dem Stand der Technik bekannt sind.

Durch die erfindungsgemäße Ausbildung der Fördervorrichtung wird verhindert, dass Erntegut im Bereich der Wendelenden im Vergleich zu angrenzenden Bereichen höher oder ungleichmäßig verdichtet wird. Stattdessen wird eine gleichmäßige Förderung des Erntegutes nicht nur bis an den Mittelabschnitt, sondern vollumfänglich auf den Mittelabschnitt erreicht. Hier haben die ersten Förderelemente nun zusätzlich zur Förderung des Erntegutes in die radiale Richtung jeweils den Zweck, dass durch das jeweils andere erste Förderelement in die radiale Richtung zu fördernde Erntegut diesem anderen ersten Förderelement zuvor zuzuleiten. Insgesamt werden so Lastspitzen vermieden, wodurch zum einen der zum Betrieb der Fördervorrichtung notwendige Energieaufwand reduziert ist und zum anderen die Fördervorrichtung weniger massiv ausgebildet werden kann.

Vorzugsweise erstrecken sich die ersten Seitenflächen der ersten Förderelemente in Radialansichten zumindest im Wesentlichen in die erste Spiralrichtung. Die Drehachse erstreckt sich rechtwinklig zu den Sichtrichtungen der Radialansichten. Die ersten Seitenflächen erstrecken sich hierbei nicht ausschließlich in die Hauptdrehrichtung, sondern anteilig in die erste axiale Richtung und anteilig in die Hauptdrehrichtung. Insbesondere erstreckt sich die erste Seitenfläche des der ersten Förderwendel zugeordneten ersten Förderelementes zumindest im Wesentlichen parallel zur zweiten Förderwendel und umgekehrt. Zumindest im Wesentlichen parallel erstreckt sich die erste Seitenfläche insbesondere, wenn die Richtungsabweichung in der jeweiligen Radialansicht lokal 10° nicht übersteigt. In der Radialansicht verjüngt sich das erste Förderelement durch diese Ausbildung bevorzugt entgegen der Hauptdrehrichtung. Durch diese Form der ersten Seitenfläche lassen sich die Förderkanäle durch die ersten Förderelemente ohne weiteres auch über eine längere Distanz weiterbilden, wodurch der Erntegutfluss noch gleichmäßiger wird.

Die ersten Förderelemente bilden bevorzugt jeweils zumindest eine Förderfläche aus. Die Förderfläche dient insbesondere zur Förderung des Erntegutes in die radiale Richtung. Die Förderfläche erstreckt sich besonders bevorzugt in die erste axiale Richtung zumindest im Wesentlichen parallel zur Drehachse. Die Förderfläche erstreckt sich in einem Querschnitt durch die ersten Förderelemente bevorzugt schräg auf dem Grundkörper. Der Abstand der Förderfläche von der Drehachse nimmt mit wachsendem Abstand der Förderfläche vom Wendelende der Förderwendel, der das die Förderfläche ausbildende erste Förderelement zugeordnet ist, besonders bevorzugt zu. Die ersten Förderelemente stehen also derart vom Grundkörper ab, dass ihre Radien entgegen der Hauptdrehrichtung allmählich ansteigen. Hierdurch lassen sich die unbeabsichtigten Lastspitzen besser vermeiden und ein gleichmäßigerer Erntegutfluss erreichen.

Die Förderflächen grenzen insbesondere an die ersten Seitenflächen an. Die ersten Seitenflächen grenzen in den Radialansichten insbesondere mit einem stumpfen Winkel an eine Außenkante der Förderflächen und mit einem spitzen Winkel an eine Innenkante der Förderflächen an. Die Förderflächen oder ihre Innenkanten sind relativ zum jeweiligen Wendelende bevorzugt um 15° bis 25° entgegen der Hauptdrehrichtung versetzt. Dieser Versatz ermöglicht eine besonders weitgehende Weiterbildung der ersten Förderkanäle, ohne dass der Abstand zwischen den ersten Seitenflächen und den Wendelenden den Erntegutfluss beeinträchtigen würde. Die von dem Grundkörper abgewandte Außenkante ist bevorzugt entgegen der Hauptdrehrichtung und in die erste axiale Richtung versetzt zum jeweiligen Wendelende angeordnet.

Die ersten Förderelemente sind bevorzugt gleichmäßig über einen Umfang des Grundkörpers verteilt angeordnet. Insbesondere sind die ersten Förderelemente in die erste axiale Richtung nicht zueinander versetzt angeordnet. Die ersten Förderelemente grenzen bevorzugt jeweils einerseits an eine erste Querschnittsebene und andererseits an zweite Querschnittsebene an. Die erste Querschnittsebene gleicht insbesondere der vorbeschriebenen Ebene, in der der erste Seitenabschnitt und der Mittelabschnitt aneinander angrenzen. Falls die Fördervorrichtung auf dem ersten Seitenabschnitt keine über die erste Förderwendel und die zweite Förderwendel hinausgehenden Förderwendeln aufweist, sind die ersten Förderelemente insbesondere um 180° zueinander in die Hauptdrehrichtung versetzt angeordnet. Das ermöglicht eine gleichmäßige Förderung des Erntegutes in die radiale Richtung.

Die ersten Förderelemente weisen in einem zur Drehachse rechtwinkligen Querschnitt vorzugsweise jeweils einen ersten Schenkel und einen dazu angewinkelten zweiten Schenkel auf. Der Winkel zwischen den Schenkeln beträgt insbesondere weniger als 90°. Zu einer Radialen, die zwischen den Schenkel hindurchverläuft, ist der erste Schenkel bevorzugt stärker angewinkelt als der zweite Schenkel. Besonders bevorzugt bildet der erste Schenkel die Förderfläche aus und/oder befindet sich der erste Schenkel in die Hauptdrehrichtung vor dem zweiten Schenkel. Der erste Schenkel ist vorzugsweisen mit einem Verschleißschutz versehen. Als Verschleißschutz dient besonders bevorzugt ein mit dem ersten Schenkel lösbar verbundenes Verschleißelement, das auf der Förderfläche angeordnet ist oder als Teil des Förderelementes selbst die Förderfläche ausbildet. Zwischen dem ersten Schenkel, dem zweiten Schenkel und dem Grundkörper befindet sich in dem Querschnitt insbesondere ein dreieckiger Hohlraum. Durch diese Ausbildung der ersten Förderelemente lassen sich die vorbeschriebenen Vorteile mit einer besonders großen Stabilität der ersten Förderelemente bei einem niedrigen Gewicht derer kombinieren. Außerdem begünstigt die Ausbildung der ersten Förderelemente das Reversieren.

Bevorzugt ist die Fördervorrichtung zumindest hinsichtlich ihrer Förderfunktion spiegelsymmetrisch aufgebaut. Dazu weist die Fördervorrichtung zumindest eine dritte Förderwendel und eine vierte Förderwendel zur Förderung des Erntegutes in eine zweite axiale Richtung auf, die der ersten axialen Richtung entgegengesetzt ist. Die dritte Förderwendel und die vierte Förderwendel erstrecken sich jeweils in eine zweite Spiralrichtung spiralförmig um einen zweiten Seitenabschnitt des Grundkörpers. Der zweite Seitenabschnitt liegt dem ersten Seitenabschnitt in Bezug auf den Mittelabschnitt gegenüber. Die dritte Förderwendel und die vierte Förderwendel bilden zwischen sich zumindest zwei zweite Förderkanäle auf dem zweiten Seitenabschnitt aus und münden jeweils in Wendelenden an dem Mittelabschnitt. Ferner weist die Fördervorrichtung zwei zweite Förderelemente zur Förderung des Erntegutes in die radiale Richtung auf, die an dem Mittelabschnitt angeordnet sind. Die zweiten Förderelemente stehen vom Grundkörper radial ab. Die zweiten Förderelemente sind der dritten Förderwendel oder vierten Förderwendel zugeordnet und bilden die zweiten Förderkanäle derart bis auf den Mittelabschnitt weiter, dass sich eine erste Seitenfläche der zweiten Förderelemente in die zweite Spiralrichtung an das Wendelende der Förderwendel anschließt, der das jeweilige zweite Förderelement zugeordnet ist.

Das vorstehend in Bezug auf die erste Förderwendel, die zweite Förderwendel, die ersten Förderkanäle und die ersten Förderelemente, insbesondere deren erste Seitenfläche, beschriebene gilt auch für die dritte Förderwendel, die vierte Förderwendel, die zweiten Förderkanäle und die zweiten Förderelemente, insbesondere deren erste Seitenfläche. Die Wendelenden der dritten Förderwendel und der vierten Förderwendel liegen bezogen auf die Hauptdrehrichtung bevorzugt zwischen den Wendelenden der ersten Förderwendel und der zweiten Förderwendel, sodass insgesamt vier gleichmäßig über den Umfang des Grundkörpers verteilte Wendelenden an den Mittelabschnitt angrenzen. Korrespondierend dazu sind die zweiten Förderelemente bezogen auf die Hauptdrehrichtung zwischen den ersten Förderelementen angeordnet.

Die ersten Förderelemente und die zweiten Förderelemente sind bevorzugt jeweils, isoliert betrachtet, spiegelsymmetrisch ausgebildet. Vorzugsweise sind die ersten Förderelemente und die zweiten Förderelemente, isoliert betrachtet, geometrisch identisch ausgebildet. Die Förderfläche der Förderelemente ist dabei bevorzugt trapezförmig ausgebildet.

Die zweiten Förderelemente sind relativ zu den ersten Förderelementen bevorzugt in die erste axiale Richtung versetzt angeordnet. Besonders bevorzugt überlappen sich die ersten und die zweiten Förderelemente bevorzugt in Bezug auf die erste axiale Richtung insofern, als die zweite Querschnittsebene die zweiten Förderelemente, insbesondere zumindest im Wesentlichen mittig, schneidet. Insbesondere haben sämtliche Förderelemente den gleichen Abstand zum nächstliegenden Ende des Grundkörpers.

Die zweiten Förderelemente bilden vorzugsweise die ersten Förderkanäle auf dem Mittelabschnitt weiter. Dazu schließt sich eine der ersten Seitenfläche der zweiten Förderelemente gegenüberliegende zweite Seitenfläche der zweiten Förderelemente in die erste Spiralrichtung an die erste Seitenfläche des in die Hauptdrehrichtung vorgeordneten ersten Förderelementes an. Für das Verhältnis der zweiten Seitenfläche des zweiten Förderelementes zur ersten Seitenfläche des ersten Förderelementes gilt das vorstehend betreffend das Verhältnis der ersten Seitenfläche des ersten Förderelementes zum Wendelende der Förderwendel, dem das erste Förderelement zugeordnet ist, beschriebene. Insbesondere liegt auch die zweite Seitenfläche des zweiten Förderelementes auf der gedachten Hilfslinie, die sich in die erste Spiralrichtung erstreckt. Insbesondere haben die ersten Förderelemente ihren ersten Seitenflächen gegenüberliegende zweiten Seitenflächen, durch die die zweiten Förderkanäle analog weitergebildet werden. Durch diesen Aufbau haben die Förderelemente gar eine weitere Funktion und bilden beidseitig die Förderkanäle weiter. Das führt insbesondere dazu, dass die ersten Förderelemente mittig auf das in den ersten Förderkanälen geförderte Erntegut auftreffen, der vom anderen ersten Förderelement mit ausgebildet ist.

Dasjenige der ersten Förderelemente, das der ersten Förderwendel zugeordnet ist, ist in einem Längsschnitt durch das erste Förderelement bevorzugt zumindest im Wesentlichen mittig zwischen den dem ersten Förderelement am nächsten liegenden, geschnittenen Abschnitten der zweiten Förderwendel und der dritten Förderwendel angeordnet. Das erste Förderelement ist also im Wesentlichen mittig zwischen den Förderwendelabschnitten angeordnet, die bezogen auf die erste axiale Richtung und die zweite axiale Richtung benachbart zum ersten Förderelement angeordnet sind. Dies trifft besonders bevorzugt auf sämtliche Förderelemente zu. Hierdurch wird erreicht, dass die Förderkanäle bei gleichbleibender Breite auf dem Mittelabschnitt weitergebildet werden, um einen möglichst laminaren Erntegutstrom zu erreichen.

Die von dem Grundkörper abgewandte Außenkante des vorgenannten ersten Förderelementes ist zumindest teilweise in einer zur Drehachse parallelen und die Förderfläche berührenden Hilfsgeraden angeordnet. Im Falle einer beispielsweise gezahnten Außenkante liegen die Spitzen der Zähne in der Hilfsgeraden und erstreckt sich die Außenkante zwischen den äußersten Spitzen. Der Abstand der Hilfsgeraden von der Drehachse entspricht bevorzugt dem Außenradius des Förderelementes. Die Hilfsgerade schneidet die zweite Förderwendel und die dritte Förderwendel. bevorzugt schneidet die Hilfsgerade zwischen der Außenkante und den genannten Förderwendeln keine weiteren Bauteile der Fördervorrichtung. Ein Schnittpunkt der Hilfsgeraden mit der zweiten Förderwendel ist um einen Abstand von der Außenkante beabstandet, um den auch ein Schnittpunkt der Hilfsgerade mit der dritten Förderwendel von der Außenkante beabstandet ist. Alternativ berührt die Hilfsgerade die zweite Förderwendel und die dritte Förderwendel. In diesem Fall ist ein Berührungspunkt der Hilfsgeraden mit der zweiten Förderwendel um den Abstand von der Außenkante beabstandet, um den auch ein Berührungspunkt der Hilfsgeraden mit der dritten Förderwendel von der Außenkante beabstandet ist. Der Abstand entspricht bevorzugt zumindest im Wesentlichen der Hälfte der Gewindesteigung der Förderwendeln.

Eine axiale Erstreckung der Außenkante entspricht zumindest einem überwiegenden Teil des vorgenannten Abstandes. Alternativ oder zusätzlich entspricht die axiale Erstreckung der Außenkante höchstens dem Abstand. Auf diese Weise entfalten die Förderelemente eine besonders große Förderwirkung in die radiale Richtung.

Die Aufgabe wird weiterhin gelöst durch einen Erntevorsatz für einen Feldhäcksler, der die vor- und/oder nachbeschriebene Fördervorrichtung umfasst. Der Erntevorsatz weist insbesondere eine Koppelvorrichtung zu seiner Kopplung mit dem Feldhäcksler auf. Außerdem weist der Erntevorsatz bevorzugt Stützräder, eine Zinken aufweisende Aufnahmeeinrichtung und/oder einen Rollenniederhalter auf. In dem Erntevorsatz dient die Fördervorrichtung dazu, in Form eines Schwads von der Aufnahmeeinrichtung aufgenommenes Erntegut zunächst in die erste axiale Richtung und die zweite axiale Richtung zu konzentrieren, um es anschließend in die radiale Richtung einer Häckseltrommel des Feldhäckslers zu führen.

Weitere Einzelheiten und Vorteile der Erfindung sind den nachfolgenden, schematischen Figuren zu entnehmen; es zeigen:
- Fig. 1: einen erfindungsgemäßen Erntevorsatz in einer perspektivischen Darstellung,
- Fig. 2: eine erfindungsgemäße Fördervorrichtung des Erntevorsatzes in einer perspektivischen Darstellung,
- Fig. 3: die Fördervorrichtung gem. Fig. 2 in einer Radialansicht,
- Fig. 4: die Fördervorrichtung gem. Fig. 3 in einem Querschnitt,
- Fig. 5: die Fördervorrichtung gem. Fig. 4 in einem Längsschnitt, wobei verdeckte Kanten gestrichelt dargestellt sind.

Die nachfolgend beschriebenen Merkmale können auch einzeln in anderen Kombinationen als dargestellt zu erfindungsgemäßen Weiterbildungen führen. Gleich oder ähnlich wirkende Teile haben teilweise identische Bezugsziffern.

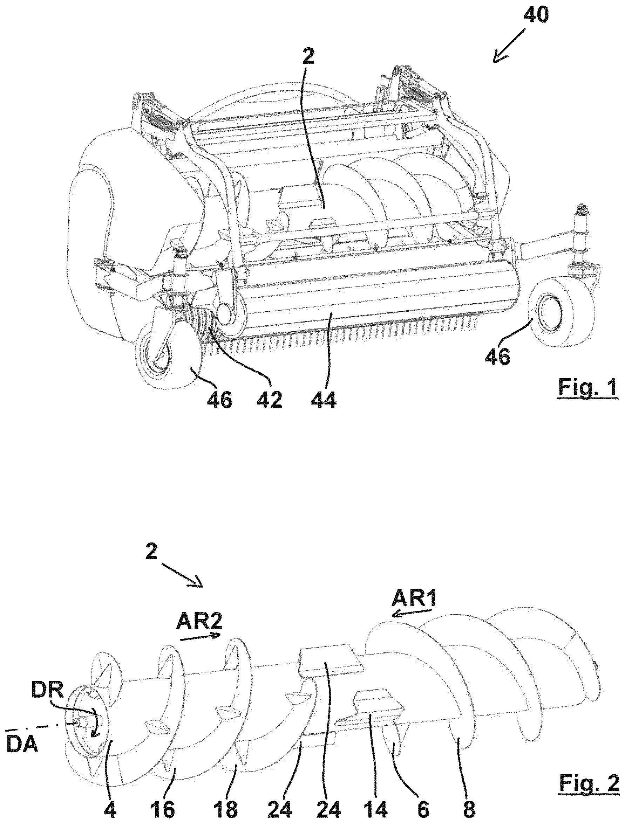

Fig. 1 zeigt einen erfindungsgemäßen Erntevorsatz 40 für einen nicht dargestellten Feldhäcksler. Der Erntevorsatz 40 weist Stützräder 46, eine Aufnahmeeinrichtung 42 und einen Rollenniederhalter 44 auf. Außerdem weist der Erntevorsatz 40 eine erfindungsgemäße Fördervorrichtung 2 auf, deren Details aus den Fig. 2 bis 5 hervorgehen.

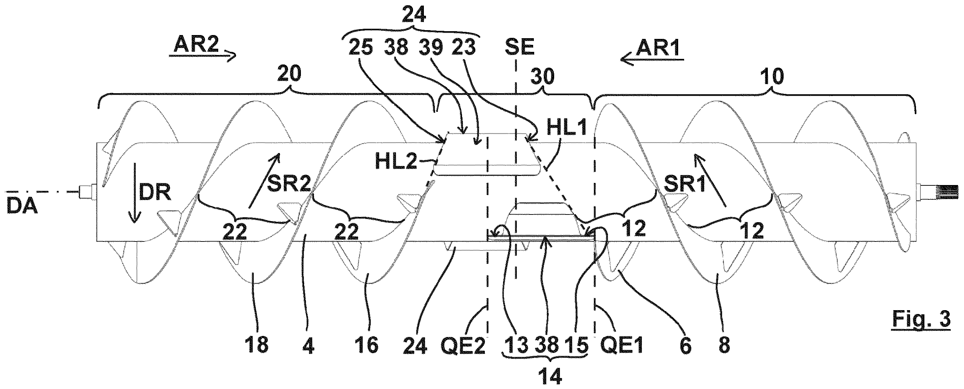

Die Fördervorrichtung 2 ist zur Förderung landwirtschaftlichen Erntegutes ausgebildet. Die Fördervorrichtung 2 ist zu einer Rotation in eine Hauptdrehrichtung DR um eine Drehachse DA ausgebildet (vgl. Fig. 2). Die Fördervorrichtung 2 weist einen Grundkörper 4 mit einem ersten Seitenabschnitt 10, einem zweiten Seitenabschnitt 20 und einem Mittelabschnitt 30 auf. Auf dem ersten Seitenabschnitt 10 sind eine Förderwendel 6 und eine zweite Förderwendel 8 zur Förderung von Erntegut in eine erste axiale Richtung AR1 angeordnet. Auf dem zweiten Seitenabschnitt 20 sind eine dritte Förderwendel 16 und eine vierte Förderwendel 18 zur Förderung von Erntegut in eine zweite axiale Richtung AR2, die der ersten axialen Richtung AR1 entgegengesetzt ist, angeordnet. Die erste Förderwendel 6 und die zweite Förderwendel 8 erstrecken sich spiralförmig in eine erste Spiralrichtung SR1 und bilden zwischen sich zwei erste Förderkanäle 12 aus. Die dritte Förderwedel 16 und die vierte Förderwendel 18 erstrecken sich spiralförmig in eine zweite Spiralrichtung SR2 und bilden zwischen sich zwei zweite Förderkanäle 22 aus (Fig. 3). Alle Förderwendeln 6, 8, 16, 18 münden in Wendelenden 32 an dem Mittelabschnitt 30 des Grundkörpers 4, wobei die Wendelenden 32 in die Hauptdrehrichtung DR zueinander versetzt angeordnet sind.

An dem Mittelabschnitt 30 des Grundkörpers 4 sind zwei erste Förderelemente 14 und zwei zweite Förderelemente 24 angeordnet. Der ersten Förderwendel 6 und der zweiten Förderwendel 8 ist jeweils eines der ersten Förderelemente 14 zugeordnet. Der dritten Förderwendel 16 und der vierten Förderwendel 18 ist jeweils eines der zweiten Förderelemente 24 zugeordnet. Die Förderelemente 14, 24 dienen zur Förderung des Erntegutes in eine radiale Richtung RR.

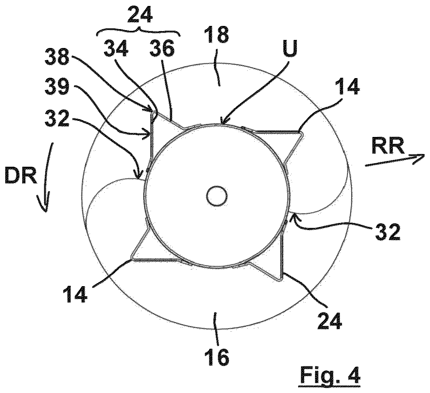

Die Förderelemente 14, 24 sind in die Hauptdrehrichtung DR gleichmäßig über einen Umfang U des Grundkörpers 4 verteilt (vgl. Querschnitt gemäß Fig. 4 entlang der Schnittebene SE aus Fig. 3). Die ersten Förderelemente 14 grenzen einerseits an eine erste zur Drehachse DA rechtwinklige Querschnittsebene QE1 und andererseits an eine zweite zur Drehachse DA rechtwinklige Querschnittsebene QE2 an (vgl. Fig. 3). In der ersten Querschnittsebene QE1 grenzt der Mittelabschnitt 30 an den ersten Seitenabschnitt 10. Die zweiten Förderelemente 24 sind derart zu den ersten Förderelementen 14 in die erste axiale Richtung AR1 versetzt angeordnet, dass die zweite Querschnittsebene QE2 die zweiten Förderelemente 24 etwa mittig schneidet.

Die Förderelemente 14, 24 sind isoliert betrachtet identisch und jeweils spiegelsymmetrisch zu einer nicht dargestellten, zur Drehachse DA rechtwinkligen Spiegelebene ausgebildet. Die Förderelemente 14, 24 weisen jeweils einen ersten Schenkel 34 und einen zweiten Schenkel 36 auf. Der erste Schenkel 34 bildet eine trapezförmige Förderfläche 39 aus, die in einer vom Grundkörper 4 abgewandten Außenkanten 38 der Förderelemente 14, 24 endet. Die Förderfläche 39 der Förderelemente 14, 24 ist derart ausgebildet, dass ihr Abstand von der Drehachse DA mit wachsendem Abstand vom in die Hauptdrehrichtung DR vorlaufenden Wendelende 32 zunimmt.

Die ersten Förderelemente 14 bilden jeweils einen der ersten Förderkanäle 12 bis auf den Mittelabschnitt 30 weiter. Dazu schließen sich erste Seitenflächen 15 der ersten Förderelemente 14 in die erste Spiralrichtung SR 1 an die Wendelenden 32 der ersten Förderwendel 6 und der zweiten Förderwendel 8 an. Die ersten Seitenflächen 15 liegen auf gedachten Hilfslinien HL1, die sich in die erste Spiralrichtung SR1 an die Wellenenden 32 anschließen. Die ersten Seitenflächen 15 erstrecken sich in der Radialansicht gemäß Fig. 3 in die erste Spiralrichtung SR1. Analog dazu bilden die zweiten Förderelemente 24 jeweils einen der zweiten Förderkanäle 22 bis auf den Mittelabschnitt 30 weiter. Erste Seitenflächen 25 der zweiten Förderelemente 24 schließen sich in die zweite Spiralrichtung SR2 an die Wendelenden 32 der dritten Förderwendel 16 und der vierten Förderwendel 18 an. Die ersten Seitenflächen 25 liegen auf gedachten Hilfslinien HL2, die sich in die zweite Spiralrichtung SR2 an die Wendelenden 32 anschließen. Die ersten Seitenflächen 25 erstrecken sich in der Radialansicht gemäß Fig. 3 in die zweite Spiralrichtung SR2.

Die zweiten Förderelemente 24 bilden außerdem die ersten Förderkanäle 12 weiter. Dazu schließt sich eine der ersten Seitenfläche 25 gegenüberliegende zweite Seitenfläche 23 in die erste Spiralrichtung SR1 an die erste Seitenfläche 15 des in die Hauptdrehrichtung DR vorgeordneten erste Förderelementes 14 an. Analog dazu bilden die ersten Förderelemente 14 die zweiten Förderkanäle 22 weiter. Dazu schlie-ßen sich den ersten Seitenflächen 15 gegenüberliegende zweite Seitenflächen 13 der ersten Förderelemente 14 in die zweite Spiralrichtung SR2 an die erste Seitenfläche 25 des in die Hauptdrehrichtung DR vorgeordneten zweiten Förderelementes 24 an.

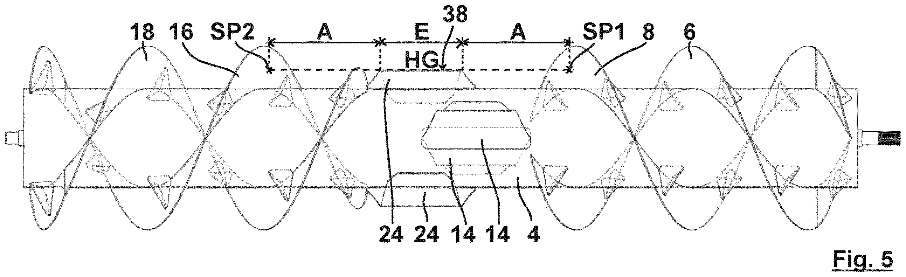

Jedes der Förderelemente 14, 24 ist in einem Längsschnitt durch die Außenkante 38 des jeweiligen Förderelementes 14, 24 und die Drehachse DA mittig zwischen den dem jeweiligen Förderelement 14, 24 in die erste axiale Richtung AR1 und die zweite axiale Richtung AR2 benachbarten, geschnittenen Abschnitten der Förderwendeln 6, 8, 16, 18 angeordnet. Die Außenkante 38 ist in einer Hilfsgeraden HG angeordnet, die in Fig. 5 beispielhaft für eines der zweiten Förderelemente 24 eingezeichnet ist. Diese Hilfsgerade HG schneidet benachbart zu dem zweiten Förderelement 24 die zweite Förderwendel 8 in einem ersten Schnittpunkt SP1 und die dritte Förderwendel 16 in einem zweiten Schnittpunkt SP2. Der Abstand A zwischen der Außenkante 38 und dem ersten Schnittpunkt SP1 entspricht dem Abstand A zwischen der Außenkante 38 und dem zweiten Schnittpunkt SP2. Die axiale Erstreckung E der Außenkante 38 ist größer als die Hälfte des Abstandes A und kleiner als der Abstand A.

## Patentansprüche

1. Fördervorrichtung (2) für landwirtschaftliches Erntegut, die zu einer Rotation in eine Hauptdrehrichtung (DR) um eine Drehachse (DA) ausgebildet ist und einen Grundkörper (4), zur Förderung des Erntegutes in eine erste axiale Richtung (AR1) zumindest eine erste Förderwendel (6) und eine zweite Förderwendel (8), die sich jeweils in eine erste Spiralrichtung (SR1) spiralförmig um einen ersten Seitenabschnitt (10) des Grundkörpers (4) erstrecken, die zwischen sich zumindest zwei erste Förderkanäle (12) auf dem ersten Seitenabschnitt (10) ausbilden und jeweils in einem Wendelende (32) an einem axial an den ersten Seitenabschnitt (10) angrenzenden Mittelabschnitt (30) des Grundkörpers (4) münden, und zur Förderung des Erntegutes in eine radiale Richtung (RR) zumindest zwei an dem Mittelabschnitt (30) angeordnete und radial von dem Grundkörper (4) abstehende, erste Förderelemente (14) aufweist, die jeweils einem der Förderwendeln (6, 8) zugeordnet sind, **dadurch gekennzeichnet, dass** die ersten Förderelemente (14) jeweils einen der ersten Förderkanäle (12) derart bis auf den Mittelabschnitt (30) weiterbilden, dass sich eine erste Seitenfläche (15) jedes ersten Förderelementes (14) in die erste Spiralrichtung (SR1) an das Wendelende (32) derjenigen Förderwendel (6, 8) anschließt, der das jeweilige erste Förderelement (14) zugeordnet ist.

2. Fördervorrichtung nach Anspruch 1, **dadurch gekennzeichnet, dass** die erste Seitenfläche (15) der ersten Förderelemente (14) sich in einer Radialansicht zumindest im Wesentlichen in die erste Spiralrichtung (SR1) erstreckt.

3. Fördervorrichtung nach einem der vorhergehenden Ansprüche, **dadurch gekennzeichnet, dass** jedes der ersten Förderelemente (14) eine von dem Grundkörper (4) abgewandte Außenkante (38) ausbildet, die entgegen der Hauptdrehrichtung (DR) und in die erste axiale Richtung (AR1) versetzt zum Wendelende (32) derjenigen Förderwendel (6, 8) angeordnet ist, der das jeweilige erste Förderelement (14) zugeordnet ist.

4. Fördervorrichtung nach einem der vorhergehenden Ansprüche, **dadurch gekennzeichnet, dass** die ersten Förderelemente (14) gleichmäßig über einen Umfang (U) des Grundkörpers (4) verteilt sind und jeweils einerseits an eine erste Querschnittsebene (QE1) und andererseits an eine zweite Querschnittsebene (QE2) angrenzen.

5. Fördervorrichtung nach einem der vorhergehenden Ansprüche, **dadurch gekennzeichnet, dass** die ersten Förderelemente (14) jeweils eine Förderfläche (39) ausbilden, die sich in die erste axiale Richtung (AR1) zumindest im Wesentlichen parallel zur Drehachse (DA) erstreckt und derart ausgebildet ist, dass ihr Abstand von der Drehachse (DA) mit wachsendem Abstand vom Wendelende (32) der Förderwendel (6, 8), der das jeweilige erste Förderelement (14) zugeordnet ist, zunimmt.

6. Fördervorrichtung nach einem der vorhergehenden Ansprüche, **dadurch gekennzeichnet, dass** die ersten Förderelemente (14) in einem zur Drehachse (DA) rechtwinkligen Querschnitt einen ersten Schenkel (34), der die Förderfläche (39) ausbildet, und einen dazu angewinkelten zweiten Schenkel (36) aufweist.

7. Fördervorrichtung nach einem der vorhergehenden Ansprüche, **gekennzeichnet durch** zumindest eine dritte Förderwendel (16) und eine vierte Förderwendel (18) zur Förderung des Erntegutes in eine der ersten axialen Richtung (AR1) entgegengesetzte zweite axiale Richtung (AR2), die sich jeweils in eine zweite Spiralrichtung (SR2) spiralförmig um einen zweiten Seitenabschnitt (20) des Grundkörpers (4), der dem ersten Seitenabschnitt (10) in Bezug auf den Mittelabschnitt (30) gegenüberliegt, erstrecken, die zwischen sich zumindest zwei zweite Förderkanäle (22) auf dem zweiten Seitenabschnitt (20) ausbilden und jeweils in Wendelenden (32) an dem Mittelabschnitt (30) münden, und zwei zweite Förderelemente (24) zur Förderung des Erntegutes in die radiale Richtung (RR), die an dem Mittelabschnitt (30) angeordnet sind, radial vom Grundkörper (4) abstehen, jeweils der dritten Förderwendel (16) oder der vierten Förderwendel (18) zugeordnet sind und die zweiten Förderkanäle (22) derart bis auf den Mittelabschnitt (30) weiterbilden, dass sich eine erste Seitenfläche (25) der zweiten Förderelemente (24) in die zweite Spiralrichtung (SR2) an das Wendelende (32) der Förderwendel (16, 18), der sie zugeordnet sind, anschließt.

8. Fördervorrichtung nach einem der vorhergehenden Ansprüche, **dadurch gekennzeichnet, dass** die zweiten Förderelemente (24) die ersten Förderkanäle (12) derart weiterbilden, dass sich eine der ersten Seitenfläche (25) gegenüberliegende zweite Seitenfläche (23) der zweiten Förderelemente (24) in die erste Spiralrichtung (SR1) an die erste Seitenfläche (15) des in die Hauptdrehrichtung (DR) vorgeordneten ersten Förderelementes (14) anschließt.

9. Fördervorrichtung nach einem der vorhergehenden Ansprüche, **dadurch gekennzeichnet, dass** die zweiten Förderelemente (24) relativ zu den ersten Förderelementen (14) in die erste axiale Richtung (AR1) versetzt angeordnet sind.

10. Fördervorrichtung nach einem der vorhergehenden Ansprüche, **dadurch gekennzeichnet, dass** die ersten Förderelemente (14) und die zweiten Förderelemente (24) geometrisch identisch ausgebildet sind.

11. Fördervorrichtung nach einem der vorhergehenden Ansprüche, **dadurch gekennzeichnet, dass** dasjenige der ersten Förderelemente (14), das der ersten Förderwendel (6) zugeordnet ist, in einem Längsschnitt durch das erste Förderelement (14) zumindest im Wesentlichen mittig zwischen den dem ersten Förderelement (14) nächsten geschnittenen Abschnitten der zweiten Förderwendel (8) und der dritten Förderwendel (16) angeordnet ist.

12. Fördervorrichtung nach einem der vorhergehenden Ansprüche, **dadurch gekennzeichnet, dass** die von dem Grundkörper (4) abgewandte Außenkante (38) des ersten Förderelementes (14) zumindest teilweise in einer zur Drehachse (DA) parallelen Hilfsgeraden (HG) angeordnet ist, die die zweite Förderwendel (8) und die dritten Förderwendel (16) schneidet, wobei ein Schnittpunkt (SP1) der Hilfsgeraden (HG) mit der zweiten Förderwendel (8) um einen Abstand (A) von der Außenkante (38) beabstandet ist, um den auch ein Schnittpunkt (SP2) der Hilfsgeraden (HG) mit der dritten Förderwendel (16) von der Außenkante (38) beabstandet ist.

13. Fördervorrichtung nach einem der vorhergehenden Ansprüche, **dadurch gekennzeichnet, dass** eine axiale Erstreckung (E) der Außenkante (38) zumindest einem überwiegenden Teil des Abstandes (A) entspricht und/oder höchstens dem Abstand (A) entspricht.

14. Erntevorsatz (40) für einen Feldhäcksler, aufweisend eine Fördervorrichtung (2) nach einem der vorhergehenden Ansprüche.
